# EUROPÄISCHE PATENTSCHRIFT

(11) **EP 2 049 794 B1**
(45) Veröffentlichungstag und Bekanntmachung des Hinweises auf die Patenterteilung: **26.06.2013**
(21) Anmeldenummer: 07787083.0
(22) Anmeldetag: 05.07.2007
(51) Int. Cl.: F04B 1/04

(54) **DICHT- UND FÜHRUNGSEINRICHTUNG FÜR EINEN KOLBEN EINER KOLBENPUMPE**
SEALING AND GUIDING DEVICE FOR A PISTON OF A PISTON PUMP
DISPOSITIF D'ÉTANCHEITÉ ET DE GUIDAGE POUR UN PISTON D'UNE POMPE À PISTON

(30) Priorität: 04.08.2006 DE 102006036442
(43) Veröffentlichungstag der Anmeldung: 22.04.2009
(73) Patentinhaber: Robert Bosch GmbH, 70442 Stuttgart (DE)
(72) Erfinder: SCHEPP, Rene, 71336 Waiblingen (DE); HERMANN, Harald, 71292 Friolzheim (DE); FELLMETH, Reiner, 74354 Besigheim (DE); HÄCKER, Jürgen, 71701 Schwieberdingen (DE); WOLF, Ralf, 70806 Kornwestheim (DE)
(86) Internationale Anmeldenummer: PCT/EP2007/056787
(87) Internationale Veröffentlichungsnummer: WO 2008/015071

(56) Entgegenhaltungen:
- WO-A-2006/066996
- DE-A1- 10 123 038
- DE-A1- 19 904 926
- US-A- 2 045 024
- US-A- 3 916 771

## Beschreibung

### Stand der Technik

Die vorliegende Erfindung betrifft eine Dicht- und Führungseinrichtung zur Abdichtung und Führung eines Außenumfangs eines Kolbens, inbesondere für eine Kolbenpumpe.

Kolbenpumpen werden beispielsweise in Fahrzeugen in der Hydraulik oder in Bremsanlagen verwendet. Derartige Kolbenpumpen weisen einen Kolben auf, welcher z. B. mittels eines Exzenters bewegt wird. Dabei ist am Kolben ein separates Dichtelement und ein separates Führungselement zur Führung des Kolbens angeordnet. Derartige Dichtungen sind im Betrieb jedoch hohen Temperaturschwankungen ausgesetzt. Insbesondere bei sehr tiefen Temperaturen, beispielsweise bei einem Kaltstart eines Fahrzeugs im Winter, oder bei sehr hohen Temperaturen, ist die Dichtheit der Kolbenpumpe nicht gewährleistet. Insbesondere bei sehr tiefen Temperaturen verhärtet sich die Dichtung, so dass durch ein Bewegen des Kolbens im Führungsspiel ein sichelförmiger Spalt zwischen Dichtung und Kolben entstehen kann, durch welchen eine Leckage auftreten kann.

Die Offenlegungsschrift DE 101 23 038 A1 offenbart eine Kolbenpumpe, deren exzenterseitiges Ende mit einem Dichtring zu einem Exzenterraum hin abgedichtet ist. Der Dichtring stützt sich an einem Führungsring ab, der exzenterseitig zum Dichtring angeordnet ist. Der Dichtring und der Führungsring sind in einer umlaufenden Nut in einer Zylinderbohrung eines Pumpengehäuses angeordnet. Eine exzenterseitige Stirnseite des Führungsrings ist konisch und ebenso eine zugeordnete Nutwangenfläche. Gegen eine Druckbeaufschlagung durch Betrieb der Kolbenpumpe stützt sich der Dichtring am Führungsring ab und drückt diesen gegen die konische Nutwangenfläche. Aufgrund ihrer Neigung beaufschlagt die konische Nutwangenfläche den Führungsring, wenn er gegen sie gedrückt wird, radial nach innen im Sinne einer Durchmesserverengung. Der Führungsring passt sich dadurch selbsttätig an einen Durchmesser des Kolbens an, ein Spalt zwischen dem Führungsring und dem Kolben, in den der Dichtring bei Druckbeaufschlagung hineinextrudieren könnte, wird vermieden.

Das Patent US 3,916,771 A offenbart eine Kolbenpumpe, deren Kolben von einer Buchse umschlossen ist, die von einer Feder axial gegen eine Dichtungsanordnung beaufschlagt wird. Die Dichtungsanordnung umfasst einen Ring, auf dessen beiden Seiten O-Ringe angeordnet sind. Der eine O-Ring befindet sich zwischen der Buchse und dem Ring und wird von der Buchse axial gegen eine Stirnfläche des Rings gedrückt. Der andere O-Ring befindet sich auf einer der Buchse abgewandten Seite zwischen dem Ring der Dichtungsanordnung und einem feststehenden, rohrförmigen Bauteil und wird über den Ring der Dichtungsanordnung gegen das feststehende Bauteil gedrückt.

Die Offenlegungsschrift DE 199 04 926 A1 offenbart eine Kolbenpumpe für schlupfgeregelte, hydraulische Fahrzeugbremsanlagen, deren Kolben an einem exzenterseitigen Ende mit einem Dichtring abgedichtet und mit einem Führungsring axial verschieblich in einer Pumpenbohrung eines Pumpengehäuses geführt ist. Der Dichtring und der Führungsring sind in einer den Kolben umschließenden, umlaufenden Nut der Pumpenbohrung des Pumpengehäuses angeordnet. Zwischen dem Dichtring und dem Führungsring ist ein poröser Metallsinterring angeordnet, der Leckageflüssigkeit, welche den Dichtring überwindet, aufsaugt, vorübergehend speichert und in eine Ablaufbohrung leitet.

### Vorteile der Erfindung

Die erfindungsgemäße Dicht- und Führungseinrichtung mit den Merkmalen des Patentanspruchs 1 weist den Vorteil auf, dass sie eine selbstständige Kalibrierung ausführen kann. Somit kann die erfindungsgemäße Dicht- und Führungsanordnung, insbesondere auch bei tiefen Temperaturen, noch eine ausreichende Dichtheit bereitstellen. Ferner kann eine erhöhte Lebensdauer erreicht werden, da zwischen einem Kolben und einem Stützring kein Ausschlagen des Stützrings auftreten kann, wodurch eine Extrusion des Dichtrings unter den Stützring verhindert wird. Dies wird erfindungsgemäß dadurch erreicht, dass die Dicht- und Führungsanordnung einen Führungsring, einen Stützring und ein Dichtelement umfasst. Der Stützring ist zwischen dem Dichtelement und dem Führungsring angeordnet. Der Führungsring weist eine Kontaktfläche zum Stützring mit wenigstens einem Bereich auf, welcher außerhalb einer Ebene senkrecht zu einer Längsachse X-X des Kolbens liegt und geneigt zur Ebene bzw. sich zur Ebene verjüngend angeordnet ist. Mit anderen Worten ist der Stützring an wenigstens einer Seite nicht gerade, in einer Ebene liegend, ausgebildet, sondern weist zumindest einen nicht in der Ebene liegenden Teilbereich auf. Durch diesen nicht in der Ebene liegenden Teilbereich kann im Betrieb einer Pumpe das Dichtelement gegen diesen nicht in der Ebene liegenden Teilbereich drücken, so dass eine radial nach innen gerichtete Kraft auf den Stützring ausgeübt wird. Dadurch liegt der Stützring sicher an der Außenkontur des Kolbens an. Somit wird verhindert, dass das Dichtelement in einen Bereich zwischen dem Stützring und dem Kolben gedrückt wird, was zu einer Beschädigung des Dichtelements und zu einer Leckage führen kann. Somit kann insbesondere das Auftreten einer Radialfrequenz beim Stützring verhindert werden.

Die Unteransprüche zeigen bevorzugte Weiterbildungen der Erfindung.

Vorzugsweise ist der außerhalb der Ebene liegende Bereich des Führungsrings zum Stützring in einem Winkel zu der Ebene senkrecht zur Axialrichtung des Kolbens angeordnet. Hierdurch kann eine besonders einfache und kostengünstig herzustellende Dicht- und Führungsanordnung bereitgestellt werden. Der Winkel liegt dabei vorzugsweise zwischen 5° und 30°, besonders bevorzugt zwischen 10° und 20°, und ist weiter bevorzugt ca. 15°.

Gemäß einer alternativen Ausgestaltung der Erfindung ist der außerhalb der Ebene senkrecht zur Axialrichtung des Kolbens liegende Bereich ein bogenförmiger Bereich. Während des Betriebes wird hierbei ebenfalls auf das Dichtelement ein Druck in Axialrichtung ausgeübt, so dass der Stützring eine radial nach innen gerichtete Kraft erfährt und eng am Kolben anliegt.

Der außerhalb der Ebene liegende bogenförmige Bereich des Führungsrings ist vorzugsweise an der zum Kolben gerichteten Innenseite angeordnet. Besonders bevorzugt ist der bogenförmige Bereich dabei derart angeordnet, dass er, ausgehend von einem in einer Ebene senkrecht zur Axialrichtung liegenden Teilbereich, in Richtung des Exzenters gerichtet ist.

Weiter bevorzugt ist der Stützring derart ausgebildet, dass er ein radial nach außen gerichtetes Ende aufweist, welches einen sich verjüngenden Bereich aufweist. Durch diesen sich verjüngenden Bereich an der Außenseite des Stützrings wird vermieden, dass der Stützring bei Auftreten eines Vordrucks scharfe Kanten erzeugen kann und somit eventuell das Dichtelement beschädigen kann.

Weiter bevorzugt verjüngt sich der Stützring in Radialrichtung von innen nach außen kontinuierlich. Dabei ist der Stützring besonders bevorzugt symmetrisch zu einer Mittelebene ausgebildet.

Besonders bevorzugt ist eine Kontaktfläche des Stützrings entsprechend der Form einer Kontaktfläche des Führungsrings ausgebildet. Hierdurch wird gewährleistet, dass der Stützring ohne Verformung an der Kontur des Führungsrings anliegen kann.

Die erfindungsgemäße Dicht- und Führungseinrichtung wird besonders bevorzugt in Kolbenpumpen von Fahrzeugen verwendet. Die Kolbenpumpen werden dabei beispielsweise in Bremsanlagen bei Radialkolbenpumpen oder in der Fahrzeughydraulik verwendet.

### Zeichnung

Nachfolgend werden bevorzugte Ausführungsbeispiele der Erfindung unter Bezugnahme auf die begleitende Zeichnung beschrieben. In der Zeichnung ist:
- Figur 1: eine schematische Schnittansicht einer Kolbenpumpe mit einer Dicht - und Führungseinrichtung gemäß einem ersten Ausführungsbeispiel der Erfindung,
- Figur 2: eine vergrößerte Ausschnittsdarstellung der Dicht- und Führungseinrichtung von Figur 1,
- Figur 3: eine vergrößerte Darstellung einer Dicht- und Führungseinrichtung gemäß einem zweiten Ausführungsbeispiel der Erfindung, und
- Figur 4: eine vergrößerte Darstellung einer Dicht- und Führungseinrichtung gemäß einem dritten Ausführungsbeispiel der vorliegenden Erfindung.

### Beschreibung von bevorzugten Ausführungsformen

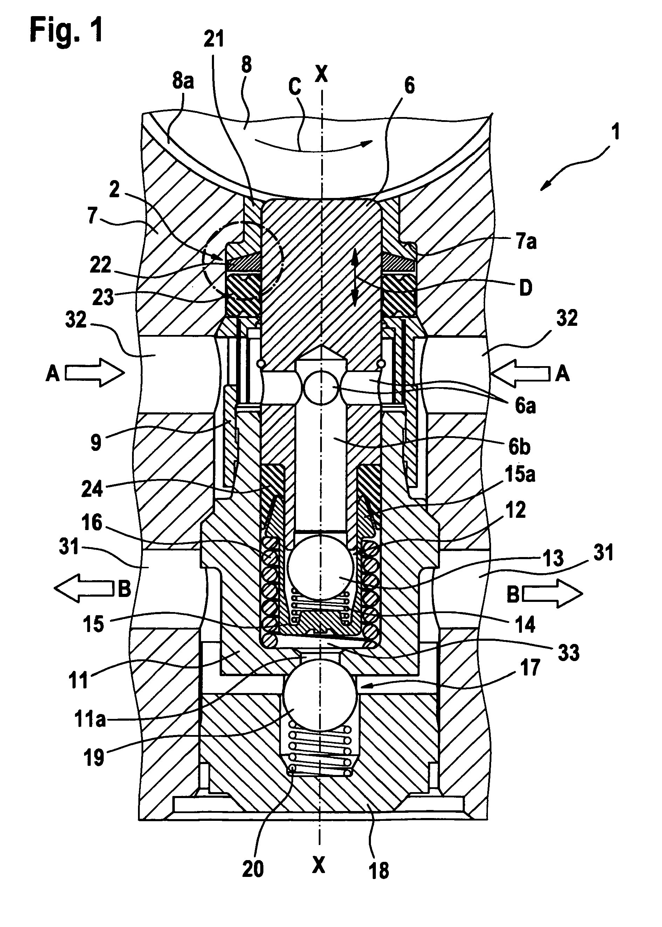

Wie in Figur 1 gezeigt, umfasst eine Kolbenpumpe 1 einen Kolben 6, welcher mittels eines Exzenters 8 angetrieben wird. Der Exzenter 8 dreht sich in Richtung des Pfeils C und befindet sich mit einem Ende des Kolbens 6 in Kontakt. Dadurch bewegt sich der Kolben 6 in Richtung des Doppelpfeils D in Axialrichtung X-X der Kolbenpumpe 1 hin und her. Im Kolben 6 sind vier (oder alternativ zwei) Querbohrungen 6a eingebracht, durch welche Fluid aus Zuleitungen 32 durch einen Filter 9 in eine Längsbohrung 9b strömen kann. Dies ist durch die Pfeile A angedeutet.

Die Kolbenpumpe 1 umfasst ferner ein Einlassventil 12, ein Auslassventil 17 und einen zwischen dem Einlassventil 12 und dem Auslassventil 17 angeordneten Druckraum 33. Der Druckraum 33 ist in einem Zylinderbauteil 11 angeordnet, welches im Wesentlichen eine topfförmige Form aufweist. An dem zum Exzenter 8 gerichteten Ende des Zylinderbauteils 11 ist der Filter 9 befestigt. Am druckraumseitigen Ende des Kobens 6 ist das Einlässventil 12 angeordnet. Das Einlassventil 12 umfasst ein Schließelement 13, welches als Kugel ausgebildet ist, eine Einlassventilfeder 14 und ein Käfigelement 15. Das Käfigelement 15 hält die Einlassventilfeder 14 und weist einen Ringbereich 15a auf, welcher am druckraumseitigen Ende des Kolbens angeordnet ist. Der Druckraum 33 wird durch eine Dichtung 24 gegen den Ansaugbereich abgedichtet. Das Bezugszeichen 16 bezeichnet eine Kolbenrückstellfeder, welche gegen den Ringbereich 15a des Käfigelements 15 drückt.

Das Auslassventil 17 ist an einem Durchlass 11a im Boden des Zylinderbauteils 11 angeordnet. Das Auslassventil 17 umfasst ein Schließelement 19 und eine Auslassfeder 20, welche in einer Ausnehmung eines Deckels 18 8 angeordnet ist. Das Schließelement 19 schließt bzw. gibt den Durchlass 11a frei.

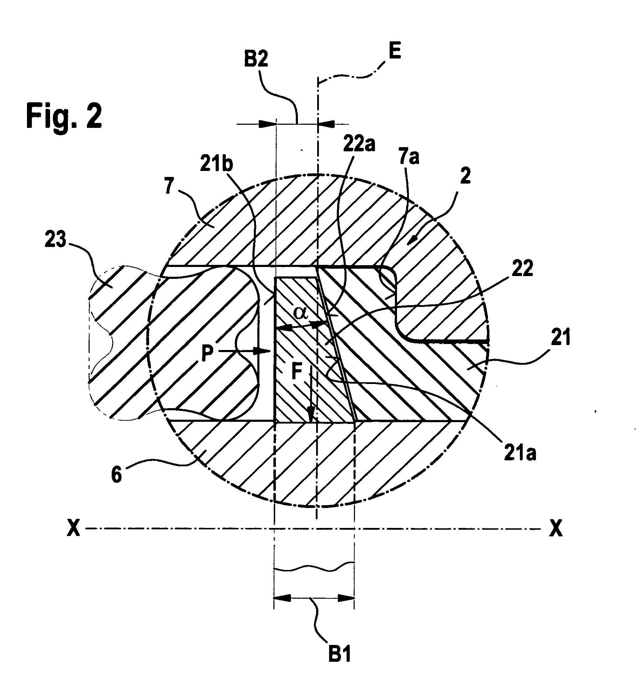

Am Kolben 6 ist ferner eine Dicht- und Führungseinrichtung 2 angeordnet. Die Dicht- und Führungseinrichtung 2 dichtet den Fluidbereich der Kolbenpumpe im Bereich der Zuleitung 32 gegen einen Exzenterraum 8a, in welchem der Exzenter 8 angeordnet ist, ab. Die Dicht- und Führungseinrichtung 2 ist im Detail in der Figur 2 dargestellt.

Wie insbesondere aus Figur 2 ersichtlich ist, umfasst die Dicht- und Führungseinrichtung 2 einen Führungsring 21, einen Stützring 22 und ein ringförmiges Dichtelement 23. Der Führungsring 21 ist an einer Stufe 7a des Gehäuses 7 angeordnet und weist zwei unterschiedliche Außendurchmesser auf. Der Führungsring 21 dient zur Führung des Kolbens. Der Stützring 22 ist zwischen dem Dichtelement 23 und dem Führungsring 21 angeordnet. Der Stützring 22 weist an seiner zum Führungsring 21 gerichteten Seite einen Bereich auf, welcher außerhalb einer Ebene E, die senkrecht zur Axialrichtung X-X der Kolbenpumpe liegt, auf. Wie in Figur 2 gezeigt, ist der außerhalb der Ebene liegende Bereich eine zur Ebene E geneigte Kontaktfläche 22a, die in Richtung des Führungsrings 21 gerichtet ist. Der Stützring 22 ist dabei derart aufgebaut, dass an seinem Innenumfang eine Breite B1 größer ist als eine Breite B2 an seinem Außenumfang. Die Kontaktfläche 22a des Stützrings zum Führungsring ist dabei in einem Winkel α zur Ebene E angeordnet, wobei der Winkel α ca. 15° beträgt. Wie aus Figur 2 ersichtlich ist, sind somit die Kontaktflächen 21 a, 22a des Führungsrings 21 bzw. des Stützrings 22 komplementär zueinander ausgebildet. Hierbei weisen der Führungsring 21 und der Stützring 22 eine besonders unkomplizierte Geometrie auf, so dass diese Bauteile sehr kostengünstig hergestellt werden können. Darüber hinaus ist eine Montage sehr einfach.

Während des Betriebes der Kolbenpumpe kann in dem Ansaugbereich ein Druck vorhanden sein, welcher größer ist als ein Druck im Exzenterraum 8a. Auch kann im Saugbetrieb ein Unterdruck im Ansaugbereich vorhanden sein. Somit besteht ein Druckgefälle zwischen dem Ansaugbereich der Pumpe und dem Exzenterraum 8a, welcher durch die erfindungsgemäße Dicht- und Führungsanordnung 2 abgedichtet werden muss. Aufgrund des Druckunterschieds wird der Dichtring 23, wie durch den Pfeil P in Figur 2 angedeutet, gegen die senkrechte Seitenfläche 21 b des Stützrings 21 gedrückt. Dadurch wird der Stützring 22 gegen den Führungsring 21 gedrückt. Aufgrund der schiefen Ebene zwischen dem Stützring 22 und dem Führungsring 21 ergibt sich eine Kraftkomponente senkrecht zur Axialrichtung X-X. Dies ist in Figur 2 durch den Pfeil F angedeutet. Somit liegt der Stützring 22 im Betrieb über seinem gesamten Innenumfang immer eng am Kolben 6 an, so dass zwischen dem Kolben 6 und dem Stützring 22 kein Spalt entstehen kann. Dadurch kann verhindert werden, dass das Dichtelement 23 teilweise in einen Spalt zwischen dem Stützring 22 und dem Kolben 6 gezogen wird und dadurch beschädigt wird, wie dies im Stand der Technik der Fall ist.

Da die radial nach innen gerichtete Kraft auch beispielsweise bei einem Kaltstart eines Fahrzeugs sofort aufgebaut wird, liegt auch bei tiefen Temperaturen der Stützring 22 sicher am Kolben 6 an.

Der Stützring 22 ist vorzugsweise aus einem härteren Kunststoff, insbesondere aus PTFE oder aus PA66 hergestellt. Durch den erfindungsgemäß selbstkalibrierenden Stützring 22 wird somit insbesondere auch die Lebensdauer des Dichtelements 23 erhöht. Das Dichtelement 23 ist üblicherweise aus einem Elastomer hergestellt. Somit können erfindungsgemäß höhere Laufzeiten des Pumpenelements realisiert werden, da zwischen dem Kolben 6 und dem Stützring 22 kein Ausschlagen des Stützrings stattfinden kann, was zu einer Extrusion des Dichtelements in den Spalt zwischen dem Kolben und dem Stützring führen könnte. Somit kalibriert sich der Stützring 22 immer selbstständig, sobald das Pumpenelement mit Vordruck beaufschlagt wird. Ferner fungiert der Stützring 22 zusätzlich als Schmutzabstreifer, was weiter den Verschleiß des Dichtelements 23 reduziert und die Lebensdauer des Dichtelements verlängert.

Um eine zu große Reibung durch den Stützring 22 auf den Kolben zu vermeiden, darf der Winkel α nicht zu groß gewählt werden. Von daher ist bevorzugt, dass er zwischen 5° und 30° liegt.

Die Funktion der erfindungsgemäßen Kolbenpumpe 1 ist dabei wie folgt. Während eines Ansaughubes wird Fluid durch die Zuleitungen 22, die Querbohrungen 6a und die Längsbohrung 6b durch das geöffnete Einlassventil 12 in den Druckraum 23 angesaugt. Wenn der Kolben 6 seinen unteren Totpunkt erreicht hat, kehrt sich die Bewegungsrichtung des Kolbens um, so dass sich dieser in Richtung auf das Auslassventil 17 zubewegt. Dadurch schließt das Einlassventil 12 2 und es erfolgt ein Druckaufbau im Druckraum 23. Wenn der Druck im Druckraum 23 größer ist als ein im Auslasskanal 21 herrschender Gegendruck und eine Vorspannkraft der Auslassventilschließfeder 20, öffnet das Auslassventil 17, so dass das unter Druck stehende Fluid, wie durch die Pfeile B angedeutet, in die Auslasskanäle 21 strömt und von dort zu entsprechenden Verbrauchern gelangt. Wenn der Kolben 6 seinen oberen Totpunkt erreicht hat, ist die Druckaufbauphase beendet und die Ansaugphase beginnt wieder, wobei das Auslassventil 17 geschlossen und das Einlassventil 12 geöffnet wird. Wie aus Figur 1 ersichtlich ist, übernimmt die erfindungsgemäße Dicht- und Führungseinrichtung 2 während des gesamten Zyklus die Führung des Kolbens 6 sowie die Abdichtung des Ansaugbereichs gegenüber dem Exzenterraum 8a.

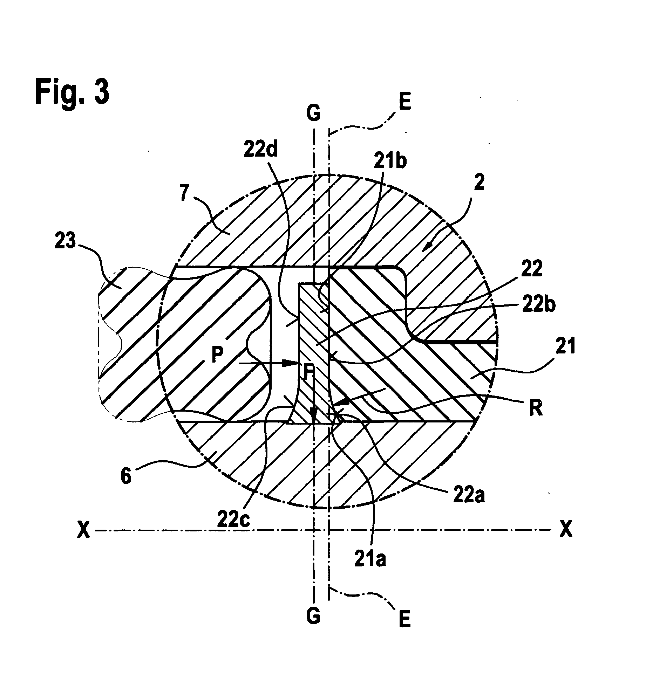

Nachfolgend wird unter Bezugnahme auf Figur 3 eine Dicht- und Führungsanordnung 2 gemäß einem zweiten Ausführungsbeispiel der Erfindung beschrieben. Gleiche bzw. funktional gleiche Teile sind mit den gleichen Bezugszeichen wie im ersten Ausführungsbeispiel bezeichnet.

Wie aus Figur 3 ersichtlich ist, sind beim zweiten Ausführungsbeispiel der Führungsring 21 und der Stützring 22 unterschiedlich zum ersten Ausführungsbeispiel ausgebildet. Der Führungsring 21 weist einen außerhalb der Ebene E liegenden Bereich 21a auf, welcher durch einen in Richtung des Exzenters gerichteten Radius R gebildet wird. Der außerhalb der Ebene E liegende Bereich 21 a ist somit als bogenförmiger Bereich gebildet. Ferner weist die Kontaktfläche des Führungsrings zum Stützring noch einen in der Ebene E liegenden Teilbereich 21b auf, welcher bis zum äußeren Umfang des Führungsrings 21 reicht. Ein Übergang zwischen dem bogenförmigen Bereich 21a und dem in der Ebene liegenden Teilbereich 21b ist kontinuierlich ausgebildet.

Der Stützring 22 des zweiten Ausführungsbeispiels weist eine Kontaktfläche zum Führungsring auf, welche komplementär zur Kontaktfläche des Führungsrings 21 gebildet ist. Der Stützring 22 weist somit ebenfalls einen bogenförmigen Bereich 22a sowie einen in der Ebene E liegenden geraden Bereich 22b auf. Der bogenförmige Bereich 22a liegt dabei in Richtung der Innenseite des Stützrings 22. Wie aus Figur 3 ersichtlich ist, ist der Stützring 22 symmetrisch zu einer Mittelebene G durch den Stützring senkrecht zur Längsrichtung X-X ausgebildet, so dass ein zum Dichtelement 23 gerichteter Bereich ebenfalls einen bogenförmigen Bereich 22c und einen geraden Bereich 22d aufweist.

Die Funktion der Dicht- und Führungsanordnung 2 gemäß dem zweiten Ausführungsbeispiel ist dabei ähnlich zu der des ersten Ausführungsbeispiels. Wenn ein Vordruck auf das Dichtelement 23 in Richtung des Exzenters wirkt, wird das Dichtelement gegen den Stützring 22 gedrückt, wie durch den Pfeil P angedeutet. Dadurch wird der Stützring 22 einerseits gegen den Führungsring 21 gedrückt und andererseits wird aufgrund der bogenförmigen Bereiche eine radial nach innen gerichtete Kraft F erzeugt, so dass der Stützring 22 eng am Kolben 6 anliegt. Diese nach innen gerichtete Kraft F ist dabei am gesamten Innenumfang des Stützrings 22 vorhanden. Dadurch kann eine Spaltextrusion des Dichtelements 23 zwischen dem Kolben 6 und dem Stützring 22 verhindert werden. Ansonsten entspricht dieses Ausführungsbeispiel dem ersten Ausführungsbeispiel, so dass auf die dort gegebene Beschreibung verwiesen werden kann.

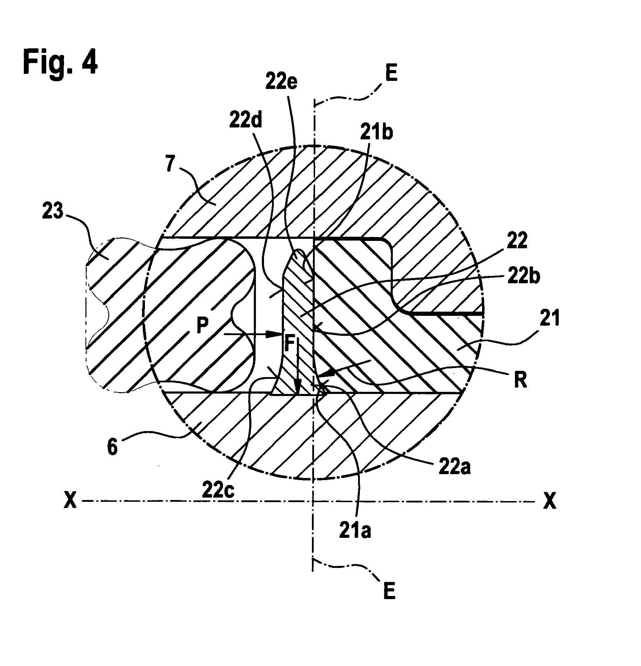

Figur 4 zeigt eine Dicht- und Führungsanordnung 2 gemäß einem dritten Ausführungsbeispiel der vorliegenden Erfindung, wobei gleiche bzw. funktional gleiche Teile mit den gleichen Bezugszeichen wie in den vorherigen Ausführungsbeispielen bezeichnet sind.

Wie in Figur 4 gezeigt, entspricht das dritte Ausführungsbeispiel im Wesentlichen dem zweiten Ausführungsbeispiel, wobei ein radial äußerer Endbereich des Stützrings 22 unterschiedlich ausgebildet ist. Wie in Figur 4 gezeigt, ist der radial äußere Endbereich 22e des Stützrings 22 sich verjüngend ausgebildet. Dadurch kann eine Bildung von scharfen Kanten bei Vorhandensein eines Vordrucks auf das Dichtelement 23 verhindert werden. Somit kann sichergestellt werden, dass das Dichtelement 23 nicht durch eine scharfe Kante des Stützrings 22 beschädigt wird. Ansonsten entspricht dieses Ausführungsbeispiel dem zweiten Ausführungsbeispiel, so dass auf die dort gegebene Beschreibung verwiesen werden kann.

## Patentansprüche

1. Dicht- und Führungsanordnung zur Abdichtung an einem Kolben (6) einer Pumpe, umfassend einen Führungsring (21) und ein Dichtelement (23), wobei eine Kontaktfläche des Führungsrings (21) zumindest einen Bereich (21a) aufweist, welcher außerhalb einer Ebene (E) senkrecht zu einer Längsachse (X-X) des Kolbens liegt, wobei der Bereich geneigt zur Ebene (E) angeordnet ist, **dadurch gekennzeichnet, dass** die Dicht- und Führungsanordnung (2) einen Stützring (22) aufweist, der zwischen dem Dichtelement (23) und dem Führungsring (21) angeordnet ist, und dass die Kontaktfläche des Führungsrings (21), die zumindest einen zur Ebene (E) senkrecht zur Längsachse (X-X) des Kolbens (6) geneigten Bereich (21a) aufweist, eine Kontaktfläche des Führungsrings (21) zum Stützring (22) ist.

2. Dicht- und Führungsanordnung nach Anspruch 1, **dadurch gekennzeichnet, dass** der außerhalb der Ebene (E) liegende Bereich der Kontaktfläche des Führungsrings eine Fläche ist, welche die Ebene (E) in einem Winkel (α) schneidet.

3. Dicht- und Führungsanordnung nach Anspruch 2, **dadurch gekennzeichnet, dass** der Winkel (α) zwischen 5° und 30°, insbesondere zwischen 10° und 20°, liegt.

4. Dicht- und Führungsanordnung nach Anspruch 1, **dadurch gekennzeichnet, dass** der außerhalb der Ebene (E) liegende Bereich ein bogenförmiger Bereich (21a) ist.

5. Dicht- und Führungsanordnung nach Anspruch 4, **dadurch gekennzeichnet, dass** der bogenförmige Bereich (21a) an der Kontaktfläche zum Stützring (22) am inneren Umfangsende des Führungsrings (21) gebildet ist.

6. Dicht- und Führungsanordnung nach Anspruch 4 oder 5, **dadurch gekennzeichnet, dass** die Kontaktfläche des Führungsrings (21) ferner einen in der Ebene (E) liegenden Bereich (21b) aufweist.

7. Dicht- und Führungsanordnung nach einem der Ansprüche 4 bis 6, **dadurch gekennzeichnet, dass** der bogenförmige Bereich (21a) zum Exzenter (8) gerichtet ist.

8. Dicht- und Führungsanordnung nach einem der vorhergehenden Ansprüche, **dadurch gekennzeichnet, dass** ein radial nach außen gerichtetes Ende des Stützrings (22) einen sich verjüngenden Bereich (22e) aufweist.

9. Dicht- und Führungsanordnung nach einem der Ansprüche 1 bis 7, **dadurch gekennzeichnet, dass** ein radial nach außen gerichtetes Ende des Stützrings (22) als Ringfläche parallel zur Axialrichtung (X-X) ausgebildet ist.

10. Dicht- und Führungsanordnung nach einem der vorhergehenden Ansprüche, **dadurch gekennzeichnet, dass** der Stützring (22) sich in Radialrichtung kontinuierlich von innen nach außen verjüngt.

11. Dicht- und Führungsanordnung nach einem der vorhergehenden Ansprüche, **dadurch gekennzeichnet, dass** eine Kontaktfläche des Stützrings (22) zum Führungsring (21) komplementär zu einer Kontaktfläche des Führungsrings (21) ausgebildet ist.

12. Kolbenpumpe, umfassend eine Dicht- und Führungseinrichtung (2) nach einem der vorhergehenden Ansprüche.

## Claims

1. Sealing and guide arrangement for sealing a piston (6) of a pump, comprising a guide ring (21) and a sealing element (23), a contact face of the guide ring (21) having at least one region (21a) which lies outside a plane (E) perpendicularly with respect to a longitudinal axis (X-X) of the piston, the region being arranged in an inclined manner with respect to the plane (E), **characterized in that** the sealing and guide arrangement (2) has a supporting ring (22) which is arranged between the sealing element (23) and the guide ring (21), and **in that** the contact face of the guide ring (21), which contact face has at least one region (21a) which is inclined with respect to the plane (E) perpendicularly with respect to the longitudinal axis (X-X) of the piston (6), is a contact face of the guide ring (21) with the supporting ring (22).

2. Sealing and guide arrangement according to Claim 1, **characterized in that** that region of the contact face of the guide ring which lies outside the plane (E) is a face which intersects the plane (E) at an angle (α).

3. Sealing and guide arrangement according to Claim 2, **characterized in that** the angle (α) lies between 5° and 30°, in particular between 10° and 20°.

4. Sealing and guide arrangement according to Claim 1, **characterized in that** the region which lies outside the plane (E) is an arcuate region (21a).

5. Sealing and guide arrangement according to Claim 4, **characterized in that** the arcuate region (21a) is formed on the contact face with the supporting ring (22) at the inner circumferential end of the guide ring (21).

6. Sealing and guide arrangement according to Claim 4 or 5, **characterized in that** the contact face of the guide ring (21), has, furthermore, a region (21b) which lies in the plane (E).

7. Sealing and guide arrangement according to one of Claims 4 to 6, **characterized in that** the arcuate region (21a) is directed towards the eccentric (8).

8. Sealing and guide arrangement according to one of the preceding claims, **characterized in that** a radially outwardly directed end of the supporting ring (22) has a tapering region (22e).

9. Sealing and guide arrangement according to one of Claims 1 to 7, **characterized in that** a radially outwardly directed end of the supporting ring (22) is configured as an annular face parallel to the axial direction (X-X).

10. Sealing and guide arrangement according to one of the preceding claims, **characterized in that** the supporting ring (22) tapers continuously from the inside to the outside in the radial direction.

11. Sealing and guide arrangement according to one of the preceding claims, **characterized in that** a contact face of the supporting ring (22) with the guide ring (21) is of complementary configuration with respect to a contact face of the guide ring (21).

12. Piston pump, comprising a sealing and guide device (2) according to one of the preceding claims.

## Revendications

1. Ensemble d'étanchéité et de guidage pour réaliser l'étanchéité au niveau d'un piston (6) d'une pompe, comprenant une bague de guidage (21) et un élément d'étanchéité (23), une surface de contact de la bague de guidage (21) présentant au moins une région (21a) qui se situe à l'extérieur d'un plan (E) perpendiculaire à un axe longitudinal (X-X) du piston, la région étant disposée de manière inclinée par rapport au plan (E), **caractérisé en ce que** l'ensemble d'étanchéité et de guidage (2) présente une bague de support (22) qui est disposée entre l'élément d'étanchéité (23) et la bague de guidage (21), et **en ce que** la surface de contact de la bague de guidage (21), qui présente au moins une région (21a) inclinée par rapport au plan (E) perpendiculaire à l'axe longitudinal (X-X) du piston (6), est une surface de contact de la bague de guidage (21) avec la bague de support (22).

2. Ensemble d'étanchéité et de guidage selon la revendication 1, **caractérisé en ce que** la région de la surface de contact de la bague de guidage située à l'extérieur du plan (E) est une surface qui coupe le plan (E) suivant un angle (α).

3. Ensemble d'étanchéité et de guidage selon la revendication 2, **caractérisé en ce que** l'angle (α) est compris entre 5° et 30°, notamment entre 10° et 20°.

4. Ensemble d'étanchéité et de guidage selon la revendication 1, **caractérisé en ce que** la région située à l'extérieur du plan (E) est une région de forme courbe (21a).

5. Ensemble d'étanchéité et de guidage selon la revendication 4, **caractérisé en ce que** la région de forme courbe (21a) est formée au niveau de la surface de contact avec la bague de support (22) à l'extrémité périphérique interne de la bague de guidage (21).

6. Ensemble d'étanchéité et de guidage selon la revendication 4 ou 5, **caractérisé en ce que** la surface de contact de la bague de guidage (21) présente en outre une région (21b) située dans le plan (E).

7. Ensemble d'étanchéité et de guidage selon l'une quelconque des revendications 4 à 6, **caractérisé en ce que** la région de forme courbe (21a) est orientée vers l'excentrique (8).

8. Ensemble d'étanchéité et de guidage selon l'une quelconque des revendications précédentes, **caractérisé en ce qu'**une extrémité orientée radialement vers l'extérieur de la bague de support (22) présente une région (22e) se rétrécissant.

9. Ensemble d'étanchéité et de guidage selon l'une quelconque des revendications 1 à 7, **caractérisé en ce qu'**une extrémité orientée radialement vers l'extérieur de la bague de support (22) est réalisée sous forme de surface annulaire parallèlement à la direction axiale (X-X).

10. Ensemble d'étanchéité et de guidage selon l'une quelconque des revendications précédentes, **caractérisé en ce que** la bague de support (22) se rétrécit dans la direction radiale en continu de l'intérieur vers l'extérieur.

11. Ensemble d'étanchéité et de guidage selon l'une quelconque des revendications précédentes, **caractérisé en ce qu'**une surface de contact de la bague de support (22) avec la bague de guidage (21) est réalisée de manière complémentaire d'une surface de contact de la bague de guidage (21).

12. Pompe à piston comprenant un ensemble d'étanchéité et de guidage (2) selon l'une quelconque des revendications précédentes.
